# EUROPEAN PATENT SPECIFICATION

(11) **EP 2 356 563 B1**
(45) Date of publication and mention of the grant of the patent: **27.06.2018**
(21) Application number: 09747952.1
(22) Date of filing: 23.10.2009
(51) Int. Cl.: G06F 9/44, G06F 9/445, G06F 9/4401, H04L 12/24

(54) **METHODS AND SYSTEMS FOR PROVIDING A MODIFIABLE MACHINE BASE IMAGE WITH A PERSONALIZED DESKTOP ENVIRONMENT IN A COMBINED COMPUTING ENVIRONMENT**
VERFAHREN UND SYSTEME ZUR BEREITSTELLUNG EINES MODIFIZIERBAREN MASCHINENBASISBILDES MIT EINER PERSONALISIERTEN DESKTOP-UMGEBUNG IN EINER KOMBINIERTEN DATENVERARBEITUNGSUMGEBUNG
PROCÉDÉS ET SYSTÈMES POUR FOURNIR UNE IMAGE DE BASE DE MACHINE MODIFIABLE AVEC UN ENVIRONNEMENT DE BUREAU PERSONNALISÉ DANS UN ENVIRONNEMENT INFORMATIQUE COMBINÉ

(30) Priority: 24.10.2008 US 108166 P
(43) Date of publication of application: 17.08.2011
(73) Proprietor: Citrix Systems, Inc., Fort Lauderdale, FL 33309 (US)
(72) Inventor: INNES, Andrew, Fort Lauderdale, FL 33309 (US); HAYTON, Richard, Fort Lauderdale, FL 33309 (US); BORZYCKI, Andrew, Fort Lauderdale, FL 33309 (US); LOW, Anthony, Edward, Fort Lauderdale, FL 33309 (US); WOOKEY, Michael, Fort Lauderdale, FL 33309 (US)
(74) Representative: Dummett Copp LLP
(86) International application number: PCT/US2009/061809
(87) International publication number: WO 2010/048492

(56) References cited:
- WO-A-2008/051842
- US-A1- 2003 009 537
- US-A1- 2003 233 363
- US-A1- 2005 177 792
- US-A1- 2006 075 381
- US-A1- 2006 277 405
- US-B1- 6 779 179

## Description

### TECHNICAL FIELD

The present disclosure relates to methods and systems for providing access to user files. In particular, the present disclosure relates to methods and systems for providing a modifiable virtual machine base image with a personalized desktop environment in a combined computing environment.

### BACKGROUND OF THE INVENTION

In the emerging Virtual Desktop Infrastructure (VDI) space, a personal computer desktop, including its applications, files and data, is separate from the physical machine. Typically, users use advanced terminals (called desktop appliances) to connect to a remote or "virtualized" desktop. In particular, a desktop appliance is a machine allowing a user to access a resource provided by a remote computer via a network display protocol such as Citrix ICA, Microsoft RDP, VNC, or the X11 protocol. Moreover, the desktop appliance may execute a local operating system to handle basic functions, such as receiving user input and rendering the output data generated by the resource provided by the remote computer. The remote desktop is stored on a remote central server instead of on the hard-drive of the local personal computer (i.e. the desktop appliance). Accordingly, the remote desktop may execute a single user operating system, such as Windows XP or Windows Vista, or a multi-user operating system such as Windows Server 2003 or 2008 that allows multiple independent connections to separate virtual desktops, where the different users of the independent connections are capable of having different levels of authorization privileges.

Thus the desktop appliance remotely provides access to a computing environment presenting a desktop paradigm. That is, when users work from the desktop appliance, all of the programs, applications, processes and data used by the desktop are kept and run centrally, allowing users to remotely access their desktops on any device which is capable of displaying the desktop, such as, for example, a PC, a laptop, a smart phone or a thin client.

Although desktop appliances are often referred to as 'dumb', they are often highly configurable and perform a high degree of local processing, such as, for example management of local screen and keyboard, management of locally connected devices, and the handling of specific keys and/or key combinations. However, it is often inconvenient and confusing for a user to configure both the local appliance and the virtual desktop since the VDI provides for the perception that the desktop appliance is merely an extension of the remote desktop.

In addition, administrators of modern computing environments face many challenges when providing users with access to resources. One such challenge arises when an administrator uses a product that provides the administrator with the ability to provision many desktops to physical or virtual machines from a single shared base image. This type of product typically simplifies the administrative experience because an administrator only needs to maintain a small number of images, which are deployed to multitudes of users. However, typically, the images deployed to users are transient - when the machine running the image shuts down or reboots, any changes made during the lifetime of the image are lost. If a user were to install a personalized application in these conventional environments, such as, for example, iTunes or Skype, the application would be lost upon reboot of the machine and the user would have to re-install any personalized applications each time the user logged in or powered on the machine. Thus, the end-user experience is sub-optimal in such an arrangement because the user's environment is not persistent. Moreover, the user's provisioned machine does not provide the functionality of a regular machine. Therefore, the experience of the end-user and the administrator are in conflict in such an arrangement - the administrator has simplified image management at the expense of users being able to retain their customized environments.

The solutions attempting to separate user customizations from base machine images typically attempt to do so at a disk block level. For example, linked clones from VMWare, operate at a disk block level, provides a fixed base image and creating delta disk images storing disk block changes made by the users. Although operating at disk block level allows for the rapid deployment of images, once a linked clone has been made, changes can only be made to the delta disk. If changes were made to the base disk, it would conflict with the file allocations on the delta disk, thus compromising the benefits of maintaining a shared image. However, embodiments that operate at a disk block level do not typically provide functionality for changing the base disk image since, in these embodiments, such a change would conflict with the file allocations on the delta disk. Thus, an improved end-user experience typically comes at the expense of administrative experience, particularly with regards to ease of management and maintenance.

Accordingly, there is a need for a system and method to provide the administrative benefit of simplified image management that provisioning servers provided, while providing users an experience that can match or exceed the experience provided by a shared base image.

US 2005/177792 relates to intelligent software agents associated with a user interface panel through which the agent may be configured/customised remotely. However, the problem of modifying the desktop appliance and remote machine via different mechanisms is not addressed. The present invention provides a mechanism through a single interface that concurrently conveys a change in the settings to both the desktop appliance as well as the remote machine providing the user interface.

### SUMMARY OF THE INVENTION

The present invention describes a system and method, according to claims 8 and 1, respectively, for controlling configuration data associated with a property of a desktop appliance via a user interface generated by a remote machine.

### BRIEF DESCRIPTION OF THE DRAWINGS

FIG. 1A is a block diagram depicting an embodiment of a network environment comprising local machines in communication with remote machines;
FIGS. 1B and 1C are block diagrams depicting embodiments of a computing device useful in connection with the methods and systems described herein;
FIG. 2 illustrates a block diagram depicting one embodiment of an execution machine on which a base machine disk and a user delta disk are provided;
FIG. 3A is a block diagram illustrating a system for providing a modifiable machine base disk with a personalized desktop environment in a combined computing environment, according to one embodiment of the present disclosure;
FIG. 3B is detailed block diagram of FIG. 3A;
FIG. 4 is a flow diagram illustrating a method for providing a modifiable machine base disk with a personalized desktop environment in a combined computing environment, according to one embodiment of the present disclosure;
FIG. 5 is an exemplary block diagram depicting one embodiment of a system for synchronizing configuration data associated with a display of a desktop appliance using preferences stored on a remote machine, in accordance with the present disclosure; and
FIG. 6 is an exemplary flow diagram illustrating one embodiment of a method for controlling configuration data associated with a property of a desktop appliance via a user interface generated by a remote machine, in accordance with the present disclosure.

### DETAILED DESCRIPTION

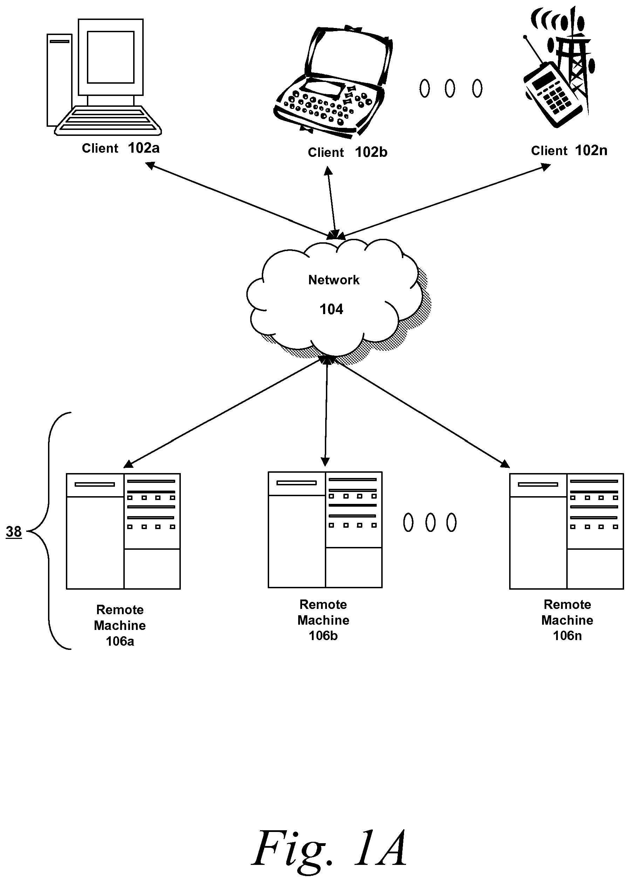

Referring now to Figure 1A, an embodiment of a network environment is depicted. In brief overview, the network environment comprises one or more clients 102a-102n (also generally referred to as local machine(s) 102, client(s) 102, client node(s) 102, client machine(s) 102, client computer(s) 102, client device(s) 102, endpoint(s) 102, or endpoint node(s) 102) in communication with one or more servers 106a-106n (also generally referred to as server(s) 106 or remote machine(s) 106) via one or more networks 104. In some embodiments, a client 102 has the capacity to function as both a client node seeking access to resources provided by a server and as a server providing access to hosted resources for other clients 102a-102n.

Although FIG. 1A shows a network 104 between the clients 102 and the servers 106, the clients 102 and the servers 106 may be on the same network 104. The network 104 can be a local-area network (LAN), such as a company Intranet, a metropolitan area network (MAN), or a wide area network (WAN), such as the Internet or the World Wide Web. In some embodiments, there are multiple networks 104 between the clients 102 and the servers 106. In one of these embodiments, a network 104' (not shown) may be a private network and a network 104 may be a public network. In another of these embodiments, a network 104 may be a private network and a network 104' a public network. In still another embodiment, networks 104 and 104' may both be private networks.

The network 104 may be any type and/or form of network and may include any of the following: a point to point network, a broadcast network, a wide area network, a local area network, a telecommunications network, a data communication network, a computer network, an ATM (Asynchronous Transfer Mode) network, a SONET (Synchronous Optical Network) network, a SDH (Synchronous Digital Hierarchy) network, a wireless network and a wireline network. In some embodiments, the network 104 may comprise a wireless link, such as an infrared channel or satellite band. The topology of the network 104 may be a bus, star, or ring network topology. The network 104 may be of any such network topology as known to those ordinarily skilled in the art capable of supporting the operations described herein. The network may comprise mobile telephone networks utilizing any protocol or protocols used to communicate among mobile devices, including AMPS, TDMA, CDMA, GSM, GPRS or UMTS. In some embodiments, different types of data may be transmitted via different protocols. In other embodiments, the same types of data may be transmitted via different protocols.

In some embodiments, the system may include multiple, logically grouped servers 106. In one of these embodiments, the logical group of servers may be referred to as a server farm 38. In another of these embodiments, the servers 106 may be geographically dispersed. In other embodiments, a server farm 38 may be administered as a single entity. In still other embodiments, the server farm 38 comprises a plurality of server farms 38. The servers 106 within each server farm 38 can be heterogeneous - one or more of the servers 106 can operate according to one type of operating system platform (e.g., WINDOWS NT, manufactured by Microsoft Corp. of Redmond, Washington), while one or more of the other servers 106 can operate on according to another type of operating system platform (e.g., Unix or Linux).

The servers 106 of each server farm 38 do not need to be physically proximate to another server 106 in the same server farm 38. Thus, the group of servers 106 logically grouped as a server farm 38 may be interconnected using a wide-area network (WAN) connection or a metropolitan-area network (MAN) connection. For example, a server farm 38 may include servers 106 physically located in different continents or different regions of a continent, country, state, city, campus, or room. Data transmission speeds between servers 106 in the server farm 38 can be increased if the servers 106 are connected using a local-area network (LAN) connection or some form of direct connection.

Server 106 may be a file server, application server, web server, proxy server, appliance, network appliance, gateway, application gateway, gateway server, virtualization server, deployment server, SSL VPN server, or firewall. In some embodiments, a server 106 provides a remote authentication dial-in user service, and is referred to as a RADIUS server. In other embodiments, a server 106 may have the capacity to function as either an application server or as a master application server. In still other embodiments, a server 106 is a blade server. In yet other embodiments, a server 106 executes a virtual machine providing, to a user or client computer 102, access to a computing environment.

In one embodiment, a server 106 may include an Active Directory. The server 106 may be an application acceleration appliance. For embodiments in which the server 106 is an application acceleration appliance, the server 106 may provide functionality including firewall functionality, application firewall functionality, or load balancing functionality. In some embodiments, the server 106 comprises an appliance such as one of the line of appliances manufactured by the Citrix Application Networking Group, of San Jose, CA, or Silver Peak Systems, Inc., of Mountain View, CA, or of Riverbed Technology, Inc., of San Francisco, CA, or of F5 Networks, Inc., of Seattle, WA, or of Juniper Networks, Inc., of Sunnyvale, CA.

In some embodiments, a server 106 executes an application on behalf of a user of a client 102. In other embodiments, a server 106 executes a virtual machine, which provides an execution session within which applications execute on behalf of a user or a client 102. In one of these embodiments, the execution session is a hosted desktop session. In another of these embodiments, the execution session provides access to a computing environment, which may comprise one or more of: an application, a plurality of applications, a desktop application, and a desktop session in which one or more applications may execute.

In some embodiments, a client 102 communicates with a server 106. In one embodiment, the client 102 communicates directly with one of the servers 106 in a server farm 38. In another embodiment, the client 102 executes a program neighborhood application to communicate with a server 106 in a server farm 38. In still another embodiment, the server 106 provides the functionality of a master node. In some embodiments, the client 102 communicates with the server 106 in the server farm 38 through a network 104. Over the network 104, the client 102 can, for example, request execution of various applications hosted by the servers 106a-106n in the server farm 38 and receive output of the results of the application execution for display. In some embodiments, only the master node provides the functionality required to identify and provide address information associated with a server 106b hosting a requested application.

In one embodiment, the server 106 provides the functionality of a web server. In another embodiment, the server 106a receives requests from the client 102, forwards the requests to a second server 106b and responds to the request by the client 102 with a response to the request from the server 106b. In still another embodiment, the server 106 acquires an enumeration of applications available to the client 102 and address information associated with a server 106' hosting an application identified by the enumeration of applications. In yet another embodiment, the server 106 presents the response to the request to the client 102 using a web interface. In one embodiment, the client 102 communicates directly with the server 106 to access the identified application. In another embodiment, the client 102 receives output data, such as display data, generated by an execution of the identified application on the server 106.

In some embodiments, the server 106 or a server farm 38 may be running one or more applications, such as an application providing a thin-client computing or remote display presentation application. In one embodiment, the server 106 or server farm 38 executes as an application any portion of the CITRIX ACCESS SUITE by Citrix Systems, Inc., such as the METAFRAME or CITRIX PRESENTATION SERVER and/or any of the MICROSOFT WINDOWS Terminal Services manufactured by the Microsoft Corporation. In another embodiment, the application is an ICA client, developed by Citrix Systems, Inc. of Fort Lauderdale, Florida. In still another embodiment, the server 106 may run an application, which, for example, may be an application server providing email services such as MICROSOFT EXCHANGE manufactured by the Microsoft Corporation of Redmond, Washington, a web or Internet server, or a desktop sharing server, or a collaboration server. In yet another embodiment, any of the applications may comprise any type of hosted service or products, such as GOTOMEETING provided by Citrix Online Division, Inc. of Santa Barbara, California, WEBEX provided by WebEx, Inc. of Santa Clara, California, or Microsoft Office LIVE MEETING provided by Microsoft Corporation of Redmond, Washington.

A client 102 may execute, operate or otherwise provide an application, which can be any type and/or form of software, program, or executable instructions such as any type and/or form of web browser, web-based client, client-server application, a thin-client computing client, an ActiveX control, or a Java applet, or any other type and/or form of executable instructions capable of executing on client 102. In some embodiments, the application may be a server-based or a remote-based application executed on behalf of the client 102 on a server 106. In one embodiments the server 106 may display output to the client 102 using any thin-client or remote-display protocol, such as the Independent Computing Architecture (ICA) protocol manufactured by Citrix Systems, Inc. of Ft. Lauderdale, Florida or the Remote Desktop Protocol (RDP) manufactured by the Microsoft Corporation of Redmond, Washington. The application can use any type of protocol and it can be, for example, an HTTP client, an FTP client, an Oscar client, or a Telnet client. In other embodiments, the application comprises any type of software related to voice over internet protocol (VoIP) communications, such as a soft IP telephone. In further embodiments, the application comprises any application related to real-time data communications, such as applications for streaming video and/or audio.

The client 102 and server 106 may be deployed as and/or executed on any type and form of computing device, such as a computer, network device or appliance capable of communicating on any type and form of network and performing the operations described herein.

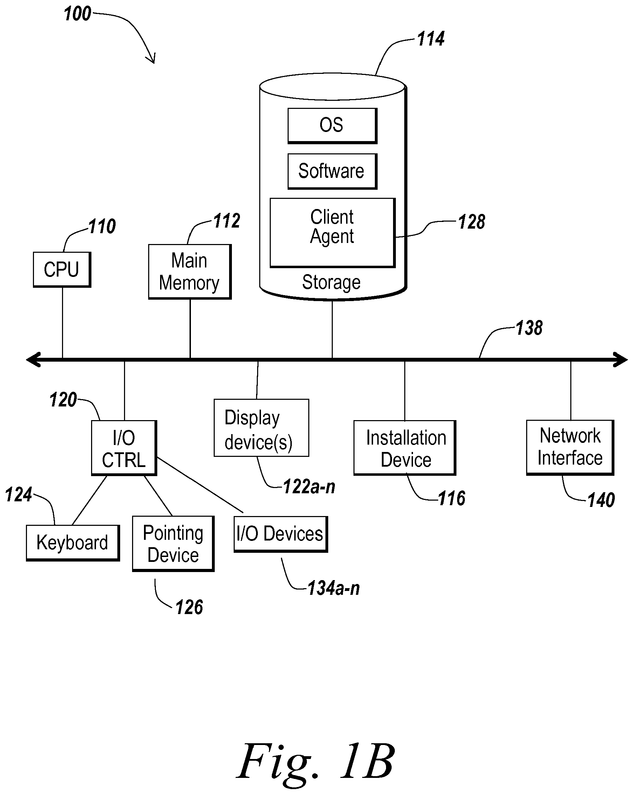

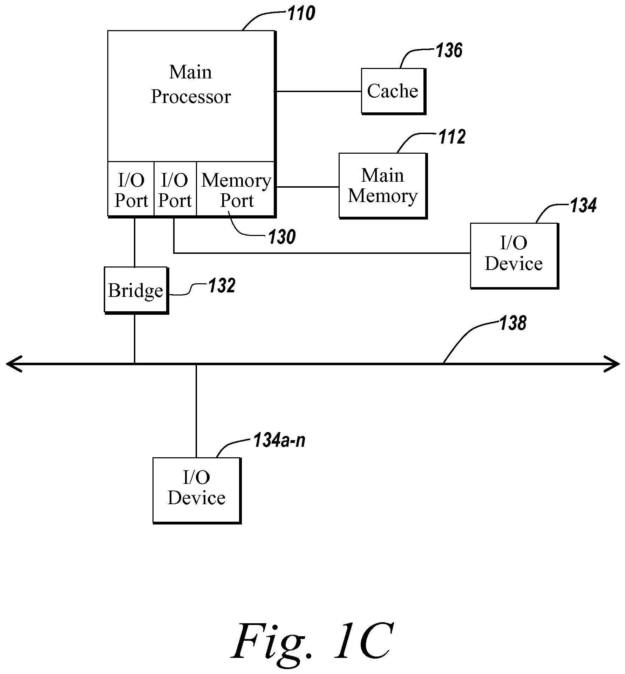

FIGS. 1B and 1C depict block diagrams of a computing device 100 useful for practicing an embodiment of the client 102 or a server 106. As shown in FIGS. 1B and 1C, each computing device 100 includes a central processing unit 110 and a main memory unit 112. As shown in FIG. 1B, the computing device 100 may include a storage device 114, an installation device 116, a network interface 140, an I/O controller 120, display devices 122a-n, a keyboard 124 and a pointing device 126, such as a mouse. The storage device 114 may include, without limitation, an operating system, software, and a client agent 128. As shown in FIG. 1C, each computing device 100 may also include additional optional elements, such as a memory port 130, a bridge 132, one or more input/output devices 134a-134n (generally referred to using reference numeral 134), and a cache memory 136 in communication with the central processing unit 110.

The central processing unit 110 is any logic circuitry that responds to and processes instructions fetched from the main memory unit 112. In many embodiments, the central processing unit 110 is provided by a microprocessor unit, such as: those manufactured by Intel Corporation of Mountain View, California; those manufactured by Motorola Corporation of Schaumburg, Illinois; those manufactured by Transmeta Corporation of Santa Clara, California; the RS/6000 processor, those manufactured by International Business Machines of White Plains, New York; or those manufactured by Advanced Micro Devices of Sunnyvale, California. The computing device 100 may be based on any of these processors, or any other processor capable of operating as described herein.

Main memory unit 112 may be one or more memory chips capable of storing data and allowing any storage location to be directly accessed by the microprocessor 110, such as Static random access memory (SRAM), Burst SRAM or SynchBurst SRAM (BSRAM), Dynamic random access memory (DRAM), Fast Page Mode DRAM (FPM DRAM), Enhanced DRAM (EDRAM), Extended Data Output RAM (EDO RAM), Extended Data Output DRAM (EDO DRAM), Burst Extended Data Output DRAM (BEDO DRAM), Enhanced DRAM (EDRAM), synchronous DRAM (SDRAM), JEDEC SRAM, PC 100 SDRAM, Double Data Rate SDRAM (DDR SDRAM), Enhanced SDRAM (ESDRAM), SyncLink DRAM (SLDRAM), Direct Rambus DRAM (DRDRAM), or Ferroelectric RAM (FRAM). The main memory unit 112 may be based on any of the above described memory chips, or any other available memory chips capable of operating as described herein. In the embodiment shown in FIG. 1B, the processor 110 communicates with main memory unit 112 via a system bus 138 (described in more detail below). FIG. 1C depicts an embodiment of a computing device 100 in which the processor communicates directly with main memory unit 112 via a memory port 130. For example, in FIG. 1C the main memory 112 may be DRDRAM.

FIG. 1C depicts an embodiment in which the main processor 110 communicates directly with cache memory 136 via a secondary bus, sometimes referred to as a backside bus. In other embodiments, the main processor 110 communicates with cache memory 136 using the system bus 138. Cache memory 136 typically has a faster response time than main memory unit 112 and is typically provided by SRAM, BSRAM, or EDRAM. In the embodiment shown in FIG. 1C, the processor 110 communicates with various I/O devices 130 via a local system bus 138. Various buses may be used to connect the central processing unit 110 to any of the I/O devices 130, including a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 122, the processor 110 may use an Advanced Graphics Port (AGP) to communicate with the display 122. FIG. 1C depicts an embodiment of a computer 100 in which the main processor 110 communicates directly with I/O device 134b via HYPERTRANSPORT, RAPIDIO, or INFINIBAND communications technology. FIG. 1C also depicts an embodiment in which local busses and direct communication are mixed: the processor 110 communicates with I/O device 134a using a local interconnect bus while communicating with I/O device 134b directly.

A wide variety of I/O devices 134a-134n may be present in the computing device 100. Input devices include keyboards, mice, trackpads, trackballs, microphones, and drawing tablets. Output devices include video displays, speakers, inkjet printers, laser printers, and dye-sublimation printers. The I/O devices may be controlled by an I/O controller 120 as shown in FIG. 1B. The I/O controller may control one or more I/O devices such as a keyboard 124 and a pointing device 126, e.g., a mouse or optical pen. Furthermore, an I/O device may also provide storage and/or an installation medium 116 for the computing device 100. In still other embodiments, the computing device 100 may provide USB connections (not shown) to receive handheld USB storage devices such as the USB Flash Drive line of devices manufactured by Twintech Industry, Inc. of Los Alamitos, California.

Referring again to FIG. 1B, the computing device 100 may support any suitable installation device 116, such as a floppy disk drive for receiving floppy disks such as 3.5-inch, 5.25-inch disks or ZIP disks, a CD-ROM drive, a CD-R/RW drive, a DVD-ROM drive, tape drives of various formats, USB device, hard-drive or any other device suitable for installing software and programs. The computing device 100 may further comprise a storage device, such as one or more hard disk drives or redundant arrays of independent disks, for storing an operating system and other related software, and for storing application software programs such as any program related to the client agent 128. Optionally, any of the installation devices 116 could also be used as the storage device. Additionally, the operating system and the software can be run from a bootable medium, for example, a bootable CD, such as KNOPPIX, a bootable CD for GNU/Linux that is available as a GNU/Linux distribution from knoppix.net.

Furthermore, the computing device 100 may include a network interface 140 to interface to the network 104 through a variety of connections including, but not limited to, standard telephone lines, LAN or WAN links (*e.g.,* 802.11, T1, T3, 56kb, X.25, SNA, DECNET), broadband connections (*e.g.*, ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS), or the Citrix Gateway Protocol manufactured by Citrix Systems, Inc. of Ft. Lauderdale, Florida. The network interface 140 may comprise a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 may comprise or be connected to multiple display devices 122a-122n, which each may be of the same or different type and/or form. As such, any of the I/O devices 134a-134n and/or the I/O controller 120 may comprise any type and/or form of suitable hardware, software, or combination of hardware and software to support, enable or provide for the connection and use of multiple display devices 122a-122n by the computing device 100. For example, the computing device 100 may include any type and/or form of video adapter, video card, driver, and/or library to interface, communicate, connect or otherwise use the display devices 122a-122n. In one embodiment, a video adapter may comprise multiple connectors to interface to multiple display devices 122a-122n. In other embodiments, the computing device 100 may include multiple video adapters, with each video adapter connected to one or more of the display devices 122a-122n. In some embodiments, any portion of the operating system of the computing device 100 may be configured for using multiple displays 122a-122n. In other embodiments, one or more of the display devices 122a-122n may be provided by one or more other computing devices, such as computing devices 100a and 100b connected to the computing device 100, for example, via a network. These embodiments may include any type of software designed and constructed to use another computer's display device as a second display device 122a for the computing device 100. One ordinarily skilled in the art will recognize and appreciate the various ways and embodiments that a computing device 100 may be configured to have multiple display devices 122a-122n.

In further embodiments, an I/O device 134 may be a bridge between the system bus 138 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a HIPPI bus, a Super HIPPI bus, a SerialPlus bus, a SCI/LAMP bus, a FibreChannel bus, or a Serial Attached small computer system interface bus.

A computing device 100 of the sort depicted in FIGS. 1B and 1C typically operates under the control of operating systems, which control scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: WINDOWS 3.x, WINDOWS 95, WINDOWS 98, WINDOWS 2040, WINDOWS NT 3.51, WINDOWS NT 4.0, WINDOWS CE, WINDOWS XP, and WINDOWS VISTA, all of which are manufactured by Microsoft Corporation of Redmond, Washington; MAC OS, manufactured by Apple Computer of Cupertino, California; OS/2, manufactured by International Business Machines of Armonk, New York; and Linux, a freely-available operating system distributed by Caldera Corp. of Salt Lake City, Utah, or any type and/or form of a Unix operating system, among others.

The computer system 100 can be any workstation, desktop computer, laptop or notebook computer, server, handheld computer, mobile telephone or other portable telecommunication device, media playing device, a gaming system, mobile computing device, or any other type and/or form of computing, telecommunications or media device that is capable of communication and that has sufficient processor power and memory capacity to perform the operations described herein. For example, the computer system 100 may comprise a device of the IPOD family of devices manufactured by Apple Computer of Cupertino, California, a PLAYSTATION 2 , PLAYSTATION 3, or PERSONAL PLAYSTATION PORTABLE (PSP) device manufactured by the Sony Corporation of Tokyo, Japan, a NINTENDO DS, NINTENDO GAMEBOY, NINTENDO GAMEBOY ADVANCED or NINTENDO REVOLUTION device manufactured by Nintendo Co., Ltd., of Kyoto, Japan, or an XBOX or XBOX 360 device manufactured by the Microsoft Corporation of Redmond, Washington.

In some embodiments, the computing device 100 may have different processors, operating systems, and input devices consistent with the device. For example, in one embodiment, the computing device 100 is a TREO 180, 270, 600, 650, 680, 700p, 700w/wx, 750, 755p, 800w, Centro, or Pro smart phone manufactured by Palm, Inc. In some of these embodiments, the TREO smart phone is operated under the control of the PalmOS operating system and includes a stylus input device as well as a five-way navigator device.

In other embodiments the computing device 100 is a mobile device, such as a JAVA-enabled cellular telephone or personal digital assistant (PDA), such as the i55sr, i58sr, i85s, i88s, i90c, i95cl, i335, i365, i570, 1576, i580, i615, i760, i836, i850, i870, i880, i920, i930, ic502, ic602, ic902, i776 or the im1100, all of which are manufactured by Motorola Corp. of Schaumburg, Illinois, the 6035 or the 7135, manufactured by Kyocera of Kyoto, Japan, or the i300 or i330, manufactured by Samsung Electronics Co., Ltd., of Seoul, Korea. In some embodiments, the computing device 100 is a mobile device manufactured by Nokia of Finland, or by Sony Ericsson Mobile Communications AB of Lund, Sweden.

In still other embodiments, the computing device 100 is a Blackberry handheld or smart phone, such as the devices manufactured by Research In Motion Limited, including the Blackberry 7100 series, 8700 series, 7700 series, 7204 series, the Blackberry 7520, the Blackberry PEARL 8100, the 8700 series, the 8800 series, the Blackberry Storm, Blackberry Bold, Blackberry Curve 8900, and the Blackberry Pearl Flip. In yet other embodiments, the computing device 100 is a smart phone, Pocket PC, Pocket PC Phone, or other handheld mobile device supporting Microsoft Windows Mobile Software. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

In some embodiments, the computing device 100 is a digital audio player. In one of these embodiments, the computing device 100 is a digital audio player such as the Apple IPOD, IPOD Touch, IPOD NANO, and IPOD SHUFFLE lines of devices, manufactured by Apple Computer of Cupertino, California. In another of these embodiments, the digital audio player may function as both a portable media player and as a mass storage device. In other embodiments, the computing device 100 is a digital audio player such as the DigitalAudioPlayer Select MP3 players, manufactured by Samsung Electronics America, of Ridgefield Park, NJ, or the Motorola m500 or m25 Digital Audio Players, manufactured by Motorola Inc. of Schaumburg, IL. In still other embodiments, the computing device 100 is a portable media player, such as the Zen Vision W, the Zen Vision series, the Zen Portable Media Center devices, or the Digital MP3 line of MP3 players, manufactured by Creative Technologies Ltd. In yet other embodiments, the computing device 100 is a portable media player or digital audio player supporting file formats including, but not limited to, MP3, WAV, M4A/AAC, WMA Protected AAC, AIFF, Audible audiobook, Apple Lossless audio file formats and .mov, .m4v, and .mp4 MPEG-4 (H.264/MPEG-4 AVC) video file formats.

In some embodiments, the computing device 100 comprises a combination of devices, such as a mobile phone combined with a digital audio player or portable media player. In one of these embodiments, the computing device 100 is a Motorola RAZR or Motorola ROKR line of combination digital audio players and mobile phones. In another of these embodiments, the computing device 100 is an iPhone smartphone, manufactured by Apple Computer of Cupertino, California.

In one embodiment, the server 106 includes a policy engine for controlling and managing the access to a resource, selection of an execution method for accessing the resource, and the delivery of resources. In another embodiment, the server 106 communicates with a policy engine. In some embodiments, the policy engine identifies the one or more resources a user or client 102 may access. In other embodiments, the policy engine determines how the resource should be delivered to the user or client 102, e.g., the method of execution. In still other embodiments, the server 106 provides, responsive to a determination made by the policy engine, a plurality of delivery techniques from which to select a method of execution, such as a server-based computing, application streaming, or delivering the application locally to the client 102 for local execution. In yet other embodiments, an enumeration of a plurality of resources available to the client 102 is provided responsive to a determination by a policy engine regarding whether and how a local machine may access a resource. The policy engine may collect information about the client 102 prior to making the determination.

For embodiments in which the resource is a computing environment, a policy may allow installation of the computing environment on the client 102. In another of these embodiments, a policy may enable the client 102 to access a copy of the computing environment executing in a virtual machine on a server 106. In still another of these embodiments, a policy may enable the client 102 to access a copy of the computing environment executing in a virtual machine on the client 102. In some embodiments, the server 106 identifies an execution machine on which to provision a virtual machine providing access to the requested computing environment. In one of these embodiments, the execution machine is the client 102. In another of these embodiments, the execution machine is the server 106. In still another of these embodiments, the execution machine is a second server 106b. In yet another of these embodiments, where the execution machine is a server 106, the execution machine may provide to a client 102 output data generated by an execution of the computing environment and transmitted to the client 102 according to a presentation layer protocol.

In some embodiments, a server 106 may select a method of providing access to the requested resource that requires the resource to execute within an isolation environment on the execution machine. An isolation environment may consist of a core system able to provide file system virtualization, registry system virtualization, and named object virtualization. The isolation environment may redirect resource requests using a registry filter driver for registry and named object virtualization, and using a file system filter driver for file system virtualization.

In some embodiments, a user isolation environment provides an isolation scope for each individual user accessing an execution machine. In other embodiments, the user isolation environment provides an isolation scope for a group of users, which may be defined by roles within the organization or may be predetermined by an administrator. In still other embodiments, a user isolation environment may be used in multi-user computers supporting concurrent execution of application programs by various users. In still even other embodiments, the user isolation environment may also be used on single-user computers. In yet other embodiments, a virtual machine executes within an isolation environment on an execution machine. In further embodiments, a virtual machine executes outside of an isolation environment on an execution machine and all other resources provided by the execution machine executed within the isolation environment.

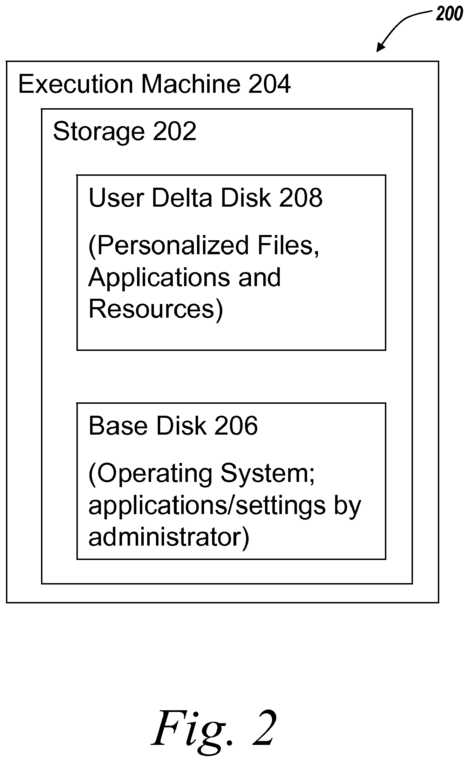

FIGS. 2-6 describe a systeme and method that separates a base machine image from any changes made by a user during a machine's lifetime, while presenting a unified view of the disk (having the base image and the user data) to the user. In particular, the system and method of the present disclosure splits up the hard disk into a base portion, which contains the base image deployed by the provisioning server, and a user delta disk component, which contains the user's environment. Thus, the system described by the present disclosure separates the user delta information from the base system at a file level. This is a significant departure from the systems described by the prior art (e.g. linked clones from VMWare), which operate at a disk block level. By operating at the file level, the invention described herein allows the merging of files from both the base image and user delta disk for providing a unified view to the user. Thus, the present invention allows the base image to be upgraded independently, where any changes to the base image can be used without having to propagate the changes to a user delta disk.

In one particular embodiment of the presently disclosed method and system, a system is described for automatically configuring the desktop appliance in accordance with any changes made to a remote desktop. In particular, a system is described for controlling configuration data associated with a property of a desktop appliance by means of a user interface generated by a remote desktop. More in particular, a desktop appliance is provided displaying a user interface generated by a resource executing on a remote desktop. A user interaction component is executed on the desktop appliance. This user interaction component receives an intercepted request by a user to modify a property of the desktop appliance by means of the user interface. It then redirects the intercepted modification to an operating system executing on the desktop appliance. The operating system executing on the desktop appliance then applies the intercepted modification.

With reference to FIG. 2, an exemplary block diagram describes a system 200 for providing a modifiable a base machine image with a personalized desktop environment in a combined computing environment. System 200 includes a storage element 202 executing on an execution machine 204. Storage element 202 is divided into a base disk 206 and a user delta disk 208, where the user delta data is separated from the base disk data at a file level. By operating at a file level, the system 200 allows for the merging of files from both the base disk 206 and user delta disk 208 to provide a unified view to the user. In addition, operating at a file level allows an administrator to update the base disk 206 independently from the user delta disk 208. Thus, an administrator can implement changes to the base disk 206 without having to propagate the changes to a user delta disk 206.

In one embodiment, base disk 206 stores a virtual machine images, where the virtual machine images are stored on a storage area network (SAN) or, alternatively, in a network-attached storage (NAS). A file server in communication with the SAN makes the virtual machine image accessible as if they were located on the NAS. The execution machine 204 may retrieve the virtual machine image for execution. Alternatively, the execution machine 204 may retrieve the base disk 206 storing the virtual machine image. In one particular embodiment, the execution machine 204 may retrieve additional configuration and data files containing a customized computing environment associated with a user. In another embodiment, the user delta disk 208 stores the additional configuration and data files and is retrieved by the execution machine 204.

In another embodiment, base disk 206 is a physical disk on an execution machine 204. Alternatively, base disk 206 provides access to an operating system. In particular, the base disk 206 is a file having a system disk image, which contains, *inter alia,* the operating system, applications, data and settings created by an administrator. In accordance with the present disclosure, the administrator may update and add to the content of base disk 206 independently from a plurality of user delta disks. A physical machine (such as, for example, execution machine 204) or a virtual machine (such as, for example, a virtual machine provided by the execution machine 204) can mount the system disk image, and load and execute the operating system on it.

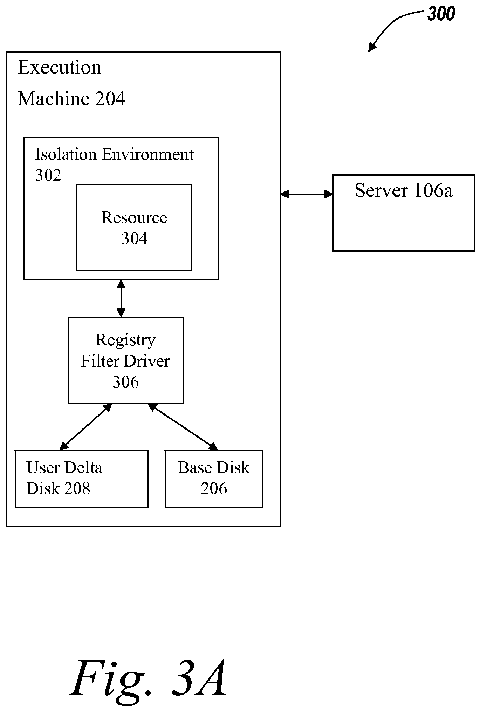

The user delta disk 208 contains any changes to the contents of the base disk 206 requested by a resource accessed by a user. In accordance with one embodiment of the present disclosure, the methods and systems described herein implement a copy-on-write strategy such that if a request to modify a file on the base disk 206 is identified, the file is first copied to the delta disk 208 where the modification is made. If a resource accessed by a user creates new files or makes changes to a registry provided by the base disk 206, these changes are also saved to the user delta disk 208. In addition, when user installs new applications, drivers, or other resources (such as resources 304 (FIG. 3A)), these changes are captured as file and registry changes and are also stored to the user delta disk 208.

The user delta disk 208 may include customizations to the operating system provided by the base disk 206. Alternatively, the user delta disk 208 includes application configuration files allowing a user to customize an application, or it may include a temporarily stored Internet file. In one particular embodiment, the user delta disk 208 identifies items stored in personal folders associated with a user including, but not limited to, folders storing cookies, URLs for favorite sites on the Internet, resources with shortcuts visible on the desktop, resources with shortcuts accessible via a particular menu (such as the Start Menu or a menu of recently accessed applications), folders storing templates, or "My Documents" folders. In yet another embodiment, the user delta disk 208 includes a data file generated by the user during interaction with a resource provided by the execution machine 204.

In one particular embodiment, the use of a plurality of user delta disks 208 is supported by system 200, where system 200 stores a number of previous user delta disks 208, or checkpoints or timestamps within a particular delta disk. Each time a user shuts down a machine, a copy of the user delta disk 208 can be stored. Therefore, the user is permitted to go "back in time" to use the machine in the state it was in a number of sessions in the past (for example, 5 reboots in the past). In addition, the user is provided with additional functionalities (for example, the ability to unwind any changes the user wants to reverse).

As described hereinabove, the user delta disk 208 stores a plurality of settings associated with a user. In one embodiment, the user delta disk 208 stores a registry key associated with the user. In another embodiment, the user delta disk 208 includes a configuration file (e.g. a data file associated with the user for processing by an application). In yet another embodiment, the user delta disk 208 includes an executable file, i.e., the user delta disk 208 may store an application program installed by the user. In this particular embodiment, the user delta disk 208 may include a registry setting (such as, for example, a desktop setting, a resource configuration, an application setting or a security configuration file) associated with the installed application program.

Thus, a user profile is associated with a user or with a group of users is also envisioned. When a user specifies a preference - for example, by resetting a default font, identifying a process for execution upon initiation of an operating system on the local machine, or changing a graphical display element, such as a theme, color, or background graphic - a setting in the user profile is updated to reflect the preference. Moreover, when a user specifies a preference, a setting in the user profile is generated. For example, a resource may generate a registry key, data file or configuration file to store an identification of the user-specified preference. Thus, these preferences and settings provide the user with a customized, user-specific environment from session to session.

The user delta disk 208 may include a plurality of settings and files that together define a personalized environment associated with a user. The user delta disk 208 may also include a collection of settings that contain user preferences and configuration settings including, but not limited to, screen color, application-specific configuration preferences, preferences associated with network connections, preferences associated with printer connections, input/output device settings, and window size and position preferences. Moreover, in another embodiment, the user delta disk 208 may include a MICROSOFT WINDOWS user profile.

In one embodiment, the user delta disk 208 includes a registry database storing settings for the user and the computer. Portions of the registry database may be stored in files referred to as hive files. In another embodiment, the user delta disk 208 includes a plurality of profile folders stored in a file system. The profile folders store data and configuration files, identifications of user-specified shortcuts, desktop images, documents, and other user-specific data.

The user delta disk 208 includes files and registry keys specific to an operating system on the execution machine 204. In one of particular embodiment, the user delta disk 208 includes a profile for a user of a local machine executing a WINDOWS operating system. In another particular embodiment, the user delta disk 208 includes configuration settings, applications and data files for a user of a local machine executing a MAC OS operating system. In yet another of embodiment, the user delta disk 208 includes configuration settings, applications and data files for a user of a local machine executing a UNIX or LINUX operating system. In yet another embodiment, the user delta disk 208 includes a profile generated in one environment, which may be accessed and applied to resources executing in a second environment. In this particular embodiment, the profile may be generated on a local machine executing a WINDOWS XP SP1 operating system and accessed by an application executing on a WINDOWS XP SP3 operating system. In yet other embodiment, the user delta disk 208 includes files and registry keys specific to an operating system provided by a virtual machine accessed via the execution machine 204.

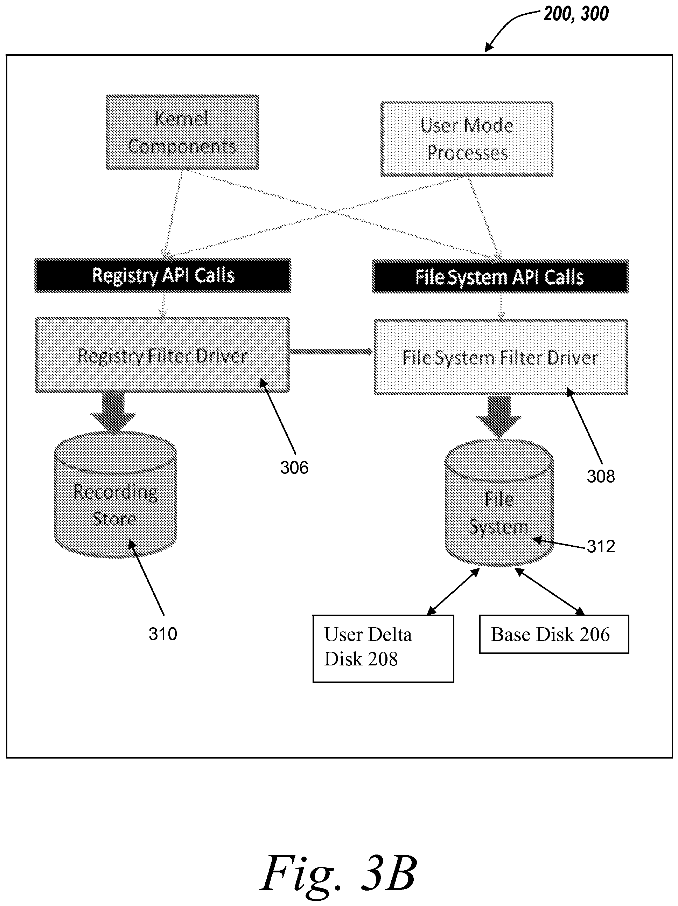

With reference to FIGS. 3A and 3B, and initially to FIG. 3A, a system 300 for providing a modifiable machine base disk 206 with a personalized desktop environment in a combined computing environment includes an isolation environment 302, at least one resource 304, and a registry filter driver 306. The at least one resource 304 may be a program, an application, a document, a file, a plurality of applications, a plurality of files, an executable program file, a desktop environment, a computing environment, or other resource made available to a user of the execution machine 204. In one particular embodiment, an executable resource (not shown) is executed to provide a user with access to a requested resource 304. For example, the user may request access to a file on the execution machine 204 and the executable resource capable of processing the requested file that is executed on the execution machine 204. In yet another embodiment, a user may request access to a single resource 304 and receive access to a plurality of applications, desktops, or computing environments. In some embodiments, the system 300 may be in communication with a server providing access to resources via a method for streaming resources.

As illustrated in FIG. 3A, the execution machine 204 executes at least one resource 304 within an isolation environment 302. In one embodiment, a user requesting access to the at least one resource 304 interacts directly with the execution machine 204, which may be a client machine 102a (FIG. 1A). In another embodiment, a user requesting access to the at least one resource 304 interacts with a client machine 102a, which receives output data generated by an execution of the at least one resource 304 on the execution machine 204. In yet another embodiment, all resources executing on the execution machine 204 execute within the isolation environment 302. In yet another embodiment, a virtual machine generated by an execution of the base machine disk 206 executes outside the isolation environment 310 and all other resources execute within the isolation environment 302.

In one embodiment, the isolation environment 302 includes a cache memory element (not shown). In another embodiment, the isolation environment 302 has access to a cache memory element. In yet another embodiment, the isolation environment 302 stores a copy of a modified setting reflecting a user customization to a file system or registry on the execution machine 204.

An agent (not shown) on the execution machine 204 creates an isolation environment 302 on the execution machine 204. The agent uses an isolation environment application programming interface to create the isolation environment 302. In addition the agent stores a plurality of application files in the isolation environment 302. The agent may also modify an operating system provided by a virtual machine executing outside the isolation environment 302 by providing access to files, applications and other resources within the isolation environment.

With continued reference to FIG. 3A, the registry filter driver 306 is adopted to capture every change made during a session to a registry included in an operating system executing on the execution machine 204. Registry filter driver 306 redirects any changes made during a session to a registry included in an operating system executing on the execution machine 204. System 300 also includes a storage component (not shown) allowing the changes to persist and making the changes available when a user reconnects to the machine in a subsequent session. It is noted that in some embodiments, the registry filter driver 306 is not used, as the registry component is not required for certain operating systems, such as, for example, Linux and UNIX-based environments.

In one embodiment, the registry filter driver 306 intercepts the registry operations of kernel components and operating system components like csrss.exe, and other processes that do not allow injection of hook dynamic-link libraries. In another embodiment, the registry data is recorded to the user delta disk 208, but not to the base disk 206, such that upon restoration of the environment, the registry filter driver 306 recreates the user registry changes. In yet another embodiment, the registry filter driver 306 recreates the changes by incrementally modifying the data in the base disk 206 to include data from the registry data stored by the user delta disk 208.

System 300 provides whole-machine virtualization, in which all resources executing within or provided by an operating system provided by the base disk 206 execute within an isolation environment. At least one running process may be isolated, or, alternatively, all running processes may be isolated. In addition, a plurality of file requests - such as file open or file write requests - made by a resource may be captured and redirected to the user delta disk 208. Each file access request is redirected to the user delta disk 208, instead of to the base disk 206. If a file is opened for read-only access, no redirection occurs. From the perspective of applications and of the operating system, the files reside on the system disk because the file system isolation driver handles the redirection and merging of files in a way that is transparent to the calling process.

In one particular embodiment, the registry filter driver 306 uses a MICROSOFT WINDOWS registry filter driver model. By using this model, registry filter driver 306 is informed of every registry modification a user requests, allowing the modification to be persisted to the user delta disk. Alternatively, the registry filter driver 306 is informed of at least one registry modification a user requests, allowing the modification to be persisted to the user delta disk. In other embodiments, however, read-only registry requests are not persisted to the user delta disk 208. A registry filter model allows modification of a registry call, allowing the registry operations to occur at runtime.

As well known in the art, the model of operation for the registry is different from that of the file system. For example, a registry filter driver model provides different capabilities on different MICROSOFT WINDOWS operating system versions. For example, on WINDOWS XP, the registry filter driver 306 records a registry modification operation to another portion of the registry, and writes out the results of the recording periodically to the user delta disk 208. On WINDOWS VISTA platforms, the registry filter model does allow redirection of registry operations and the registry filter driver 306 redirects the operation to the user delta disk 208.

Once data is captured to the user delta disk 208, it is possible, on subsequent reboots of the base disk 206, to merge in all of the user data with the operating system provided by the execution of the base disk 206. The computing environment presented to the user, which is a combination of the operating system provided by the base machine (i.e. base disk 206) and the customizations stored in the user delta disk 208, appears to a user to be the same environment as in previous sessions in which the changes were made.

Thus, in accordance with the present disclosure, user delta data is stored in a persistent storage element so that the user delta data is available after a reboot of the execution machine 204. In one particular embodiment, the user delta data is stored in a second hard drive associated with a virtual machine, which may be mapped to a network location. In another embodiment, the user delta data is stored in a virtual hard drive file that resides on a server message block (SMB) share that is mounted to appear as a hard drive on a virtual or physical machine. In yet another embodiment, the user delta data is stored in an SMB share on the execution machine 204. In some embodiments, the execution machine 204 is configured so that the destination for all registry operation request redirection is the user delta disk 208. By redirecting captured registry operation requests to the user delta disk 208, the user's registry data becomes persistent.

With reference to FIG. 3B, a block diagram illustrates one embodiment of a system for providing a modifiable machine base image with a personalized desktop environment in a combined computing environment. The system includes a registry filter driver 306, a file system filter driver 308, a recording store 310 and a file system 312.

The registry filter driver 306 is a registry filter driver as described hereinabove in connection with FIG. 3A. Upon machine startup, a service executes and monitors for a user log-on event. In one embodiment, the service is provided as a WINDOWS service. In another embodiment, the execution machine 204 initiates a virtual machine provided by the base disk 206. In yet another embodiment, the execution machine 204 executes an operating system provided by the base disk 206.

Following a user log-on event, including, for example, a user-initiated execution of a process, the execution machine 204 generates a combined computing environment. In one particular embodiment, the user executes a "ctxhvminit" process. In another embodiment, the user executes a process that replaces a "userinit.exe" process, which ensures that the user's personalized environment is restored. In accordance with the present disclosure, the user's personalized environment is restored prior to the completion of other log-on events. In addition, restoring a user's personalized environment results in execution of shell functionality (such as start menu, shortcuts, and other functionality provided by a shell) and other customized startup code executed upon user logon.

In one embodiment, the service launches a process to generate an isolation environment 302 in which other resources will execute. Moreover, the service executes the registry filter driver 306, prompting the registry filter driver 306 to begin recording registry operations. In one particular embodiment, the registry filter driver modifies a registry on the execution machine 204 to include customizations identified by data in the user delta disk 208. In another embodiment, registry filter driver 306 accesses a recording store 310 within the user delta disk 208.

In a second embodiment, the service executes a file system filter driver 308. The file system filter driver 308 accesses a definition of the isolation environment to configure a file system on the execution machine 204 for file system API call interception. In one particular embodiment, the execution machine 204 is configured so that the destination for all file system request redirection is the user delta disk 208. By redirecting file requests and intercepted file system API calls to the user delta disk 208, the user's data becomes persistent.

File system 312 is a combination of the base disk 206 and the user delta disk 208. File system 312 may also be a merged version of both the base disk 206 and the user delta disk 208, which are seen by the lower levels of the operating system as two separate drives, either physical or virtual. The file system filter driver utilizes both the base and user delta disks. In one particular embodiment, the data in the user delta disk 208 is merged with the data in the base disk 206 to present a combined computing environment. If a file exists on both the base disk 206 and the user delta disk 208, the newer file is presented. In one embodiment, the registry filter driver 306 merges base disk 206 and the user delta disk 208. In yet another embodiments, the file system filter driver 308 merges base disk 206 and the user delta disk 208.

The service accesses the registry and executes personalized services associated with the user. Data associated with the personalized services is taken from the registry and provided to a service control manager component (not shown) provided by the operating system on the execution machine 102 (FIG. 1A), to ensure appropriate dependencies are honored, and that the services are registered correctly. The service control manager component also includes functionality for processing service credentials that are not in standard formats (for example, for credentials that do not include standard user names such as, for example, LocalSystem and LocalService). The service control manager component starts services that start under specific credentials, which require a password. In one embodiment, a tray application is called and provides the user with a notification that their environment has been restored.

In one embodiment, calls to file system lifecycle and enumeration APIs (like open, close, delete, directory, etc.) are issued by either user mode processes, or other kernel components, and at least one of these calls are intercepted by the file system filter driver. In one of these embodiments, every process in the system has its open and close operations intercepted and redirected, if the file cannot be found on the base disk 206, or if the file is to be modified. When a file on the base disk 206 is modified, it is copied to the user delta disk 208, and then opened and returned to the calling process. Copying a modified file to the user delta disk 208 ensures that changes made during the lifetime of the machine are persisted on the user delta disk 208. A transient modification is made to the base disk 206. Alternatively, the transient modification does not persist and the base disk 206 is not impacted by user changes to the disk.

Calls to registry APIs are issued either by user mode processes, or by kernel components. In one embodiment, at least one of the calls is intercepted by the registry filter driver 306. In one of these embodiments, when a registry key or value is changed, the operation is recorded to another portion of the registry. Unlike in the handling of calls to the file system, the actual key used by the calling process is not redirected. The intercepted registry call is stored to another portion of the registry, which can be considered the root of the difference data for the registry, and, at periodic intervals, the stored registry delta is written out as a file to the user delta disk 208. When the machine starts up and the user delta data is merged with the base disk 206 data, the registry filter driver 306 reads the stored registry delta from the user delta disk 208, and populates the registry of the running VM with the data contained in the registry delta file. In still another of these embodiments, the key used by the calling process is redirected.

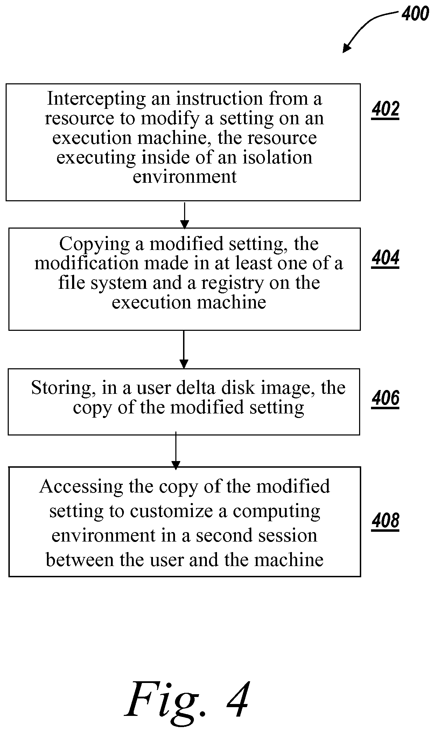

With reference to FIG. 4, in conjunction with FIGS. 2-3, a method for providing a modifiable virtual machine base image with a personalized desktop environment in a combined computing environment, is illustrated. Generally, a user accesses at least one resource 304 provided by a machine in a first session. In accordance with the present disclosure, the method includes intercepting a request from the at least one resource 304 to modify a setting on an execution machine 204, where the at least one resource executes inside of an isolation environment 302 (402); copying, (404), the modified setting to user delta disk 208, the modification made in at least one of a file system and a registry of the execution machine 204; storing a user delta disk image containing the modified setting (406); and accessing the copy of the modified setting to customize a computing environment in a second session between the user and the machine (408). The stored modification is used in customizing a computing environment in a subsequent session between the user and the virtual machine.

In one embodiment, a file system filter driver 308 intercepts the request for access to or modification of a file. In another embodiment, the registry filter driver 306 captures the modification to the setting and stores the modification to the user delta disk image 208. In yet another embodiment, at least one of the file system filter driver 308 and the registry filter driver 306 respond to the request with the data retrieved from the user delta disk 208. Registry filter driver 306 may retrieve the data from a merged registry. The file system filter driver 308 will retrieve the file data from either the base disk 208 or the user delta disk 208, whichever has the latest file. In one particular embodiment, at least one of the base disk 206 and delta disk 208 accessed by filter drivers 306 and 308 is hosted on a NAS or SAN on a network 104 (FIG. 1A).

The intercepted request may be redirected to a second machine 106b, where an agent on the second machine 106b receives the request and transmits data to the execution machine 204 in response to the request. Alternatively, at least one of the file system filter driver 308 and the registry filter driver 306 respond to the request with data retrieved from the base disk 206. In some embodiments, the request is a read-only request.

The methods and systems described by the present disclosure implement a registry filter driver, rather than a hooking component, to intercept registry changes. A method and system providing an environment in which all of the user resources on a machine execute within an isolation environment, is also envisioned. In one particular embodiment, rather than segregate applications from each other, the methods and systems herein result in an environment in which all resources - including services, drivers, data, and other non-application program components - execute in a single isolation environment. Any user changes to a data provided by a base disk 206 and accessed by a resource 304 within the isolation environment 302 are saved to a user delta disk 208. In accordance with the present disclosure, a method for executing all processes within an isolation environment 302 and merging a read-only base with data retrieved from a user delta disk 208, rather than segregating application in separate isolation environments, is referred to as whole-machine virtualization.

In another embodiment, the method for providing a modifiable machine base image with a personalized desktop environment in a combined computing environment includes executing an operating system provided by a base disk; replacing a first setting stored in at least one of a file system and a registry associated with the operating system with a modified copy of the first setting located on a delta disk 208; intercepting, by a registry filter driver 306, an instruction from a resource in a plurality of resources 304 to modify a second setting stored in at least one of the file system and the registry, the plurality of resources 304 executing inside of an isolation environment 320; and storing, in the delta disk 208, a copy of the modified second setting. In one embodiment the method includes providing, to a user associated with the user delta disk 208, access to the modified operating system. In one particular embodiment, the method includes intercepting, by a file system filter driver 308, an instruction from a resource in a plurality of resources to modify a second setting stored in at least one of the file system and the registry, the plurality of resources executing inside of an isolation environment 320, and includes storing, in the delta disk 208, a copy of the modified second setting.

The method further includes restarting the operating system, such as, for example, execution machine 204, a virtual machine executing the operating system, or at least one background process.

The method further includes replacing the second setting with the stored copy of the modified second setting. In one particular embodiment, a filter driver - such as the file system filter driver 308 or the registry filter driver 306 - modifies at least one of the file system and the registry to incorporate the modified second setting.

The method further includes restarting at least one background process incorporating the modified second setting. The at least one background process may be a service, a daemon or a device driver. The background process accesses the modified second setting during execution. In addition, the background process started executing at substantially the same time as the operating system restarted. Alternatively, the background process began executing prior to the incorporation of a modified setting into the file system or registry. Restarting the background process allows the background process to access the updated, modified setting rather than the version of the setting on the system at the time of the restarting of the operating system.

The methods and systems described herein provide functionality for overcoming the limitations of systems that do not allow a user to modify his or her computing environment, while preserving the administrative benefits of only having to maintain a small number of images. Thus, the methods and systems described herein provide functionality for decoupling a base disk managed by administrators from the user's environment. Because of the separation of the base and user delta disks, it is possible for an administrator to update the base image as needed without also having to modify the user delta disk.

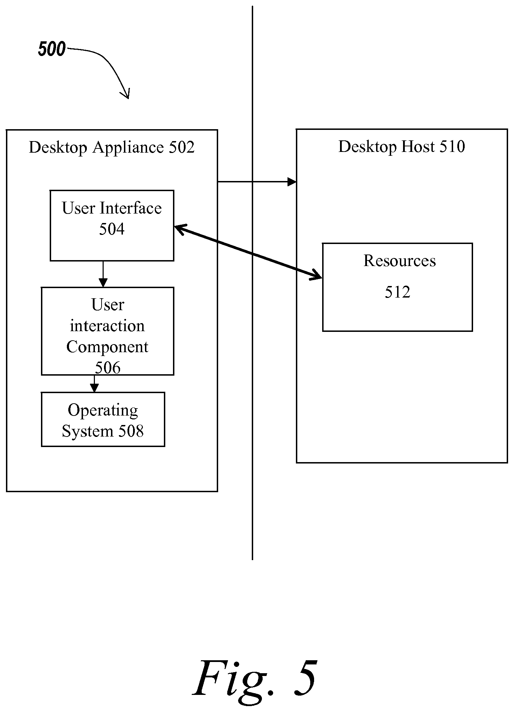

With reference to FIG. 5, in conjunction with FIGS. 1-4, one particular embodiment of the system and methods 200, 300 is described and is designated as system 500. System 500 includes a desktop appliance 502 having a user interface 504, a user interaction component 506 and an operating system 508. Desktop appliance 502 is adapted for connecting to a "virtualized" desktop or a remotely provided computing environment, such as, for example desktop host or server 510.

Desktop host 510 may be a remote machine or server 106, as described herein above in connection with FIGS. 1A-1C. In another embodiment, desktop host 510 is a physical PC located on a corporate network, a physical server (e.g., a blade PC) in a data center, or a virtual machine in a data center.

In one embodiment, the desktop appliance 502 is a client machine 102 as described herein above in connection with FIG. 1A-1B. In another embodiment, desktop appliance 502 is any device with local computing power with which a user can interact. In still another embodiment, a desktop appliance 502 is a device dedicated to providing access to resources provided by remote machines via a presentation layer protocol, in such a way that the user need not be aware that the machine they are using is actually remote. In yet another embodiment, the desktop appliance 502 is a multifunction thin client device, capable of providing access to a variety of services and resources provided by remote machines, such as, for example, presentation servers, terminal services, and web applications. In yet another embodiment, the desktop appliance 502 executes an operating system providing guaranteed local interception of the Secure Attention Sequence (normally, a combination of the control key, alt key, and delete key).

In one particular embodiment, the desktop appliance 502 is a Devon IT SAFEBOOK manufactured by Devon IT, Inc., of King of Prussia, PA. In another embodiment, the desktop appliance is a Chip PC Plug PC manufactured by Chip PC Technologies of Tirat Carmel, Israel and Irving, TX, USA. In still another embodiment, the desktop appliance 502 is an HP Compaq 2533t or 6720 Mobile Thin Client, or an HP Compaq t5135 or t5730, or an HP Compaq t5530 or t5735 Thin Client, manufactured by Hewlett-Packard Company of Palo Alto, CA. In yet another embodiment, the desktop appliance 505 is an IGEL Compact series appliance manufactured by IGEL Technology, Inc., of Fort Lauderdale, FL. In some embodiments, the desktop appliance 502 is a client machine 102 in which the user has limited or no access to functionality provided by a local operating system.

In some embodiments, the desktop appliance 502 executes a plurality of software components that are part of or registered with the desktop appliance operating system. In one of these embodiments, the software components are able to communicate with a broker service and the remote desktop host. In another of these embodiments, the software components are able to support direct uncorrupted interaction with the user by means of locally generated user interface screens and protected user input focus. In some embodiments, the plurality of software components used depends on an operating system executed by the desktop appliance 502.

In one embodiment, the user interaction component 506 controls information displayed to the user and receives input from the user. In another embodiment, the user interaction component 506 is part of an operating system 508 executing on the desktop appliance 502. In another embodiment, the user interaction component 506 is part of, or in communication with, a presentation layer protocol client agent.

With continued reference to FIG. 5, desktop appliance 502 stores a local configuration relating to a display device (e.g. monitors) connected thereto. Typically, a user is responsible for changing the configuration of the desktop appliance 502 to match the connected monitors. Similarly, a remote desktop or desktop host 510 also includes a configuration relating to the number of monitors it will attempt to drive, including various properties such as, for example, color, depth and features for each of these. It is an object of the present disclosure to provide a system and method to coordinate these two configurations.

In accordance with the present disclosure, the user will be permitted to make changes to the remote desktop 510, using the standard tools provided by the remote desktop 510 (e.g. the display properties in WINDOWS). When changes are made, the changes are applied to the remote desktop 510 and are also reflected in desktop appliance 502. Desktop appliance 502 then changes its local display settings to match, and, optionally, store these settings so that next time it connects to remote desktop 510, it will retain these settings. Accordingly, the display settings of desktop appliance 502 can be configured, thus relieving the user from having to mange two separate sets of configurations and from having to understand the configuration tools on the desktop appliance 502.

In one particular embodiment, when desktop appliance 502 is unable/unwilling to store configuration, remote desktop 510 will send a unique identifier for desktop appliance 502 during initial connection, together with a timestamp indicating when the display settings were last set locally. Remote desktop 510 then maintains a database mapping the identification of desktop appliance 502 to a display setting, etc. If the display settings are changed, they are reflected to desktop appliance 502 and stored in the database. On subsequent connections, if the database stores more timely information for connecting desktop appliance 502, then desktop appliance 502 is configured to match the same.

In yet another embodiment, remote desktop 510 can be used to make other changes in configuration to be reflected back to desktop appliance 502. For example, in one particular embodiment, if a new device is attached to desktop appliance 502, it may be necessary to configure desktop appliance 502 to recognize and configure the new device. In another embodiment, changes to input devices, such as, for example, keyboard can also be made in remote desktop 510 and be reflected back to desktop appliance 502. For example, if the keyboard is changed, or if the user wishes the current keyboard to behave differently. In yet another example, the screen savers on both remote desktop 510 and desktop appliance 502 can be configured to work in unison, for example with either being used to blank the display and/or display an animation. Moreover, the screensaver of desktop appliance 502 may be used to initiate power saving modes on the display devices.

In operation, the desktop appliance 502 displays a user interface generated by a resource 512. Resource 512 is executed in remote desktop 510 and may be selected from various configurations such as, for example, display management for configuring display devices, keyboard configuration, driver synchronization and screensavers, where changes in the desktop appliance 502 can be made in the context of remote desktop 510. The user interaction component 506 executing in desktop appliance 502 receives an intercepted request by a user to modify a property of desktop appliance 502 via the user interface 504. User interaction component 506 then redirects the intercepted request to operating system 508 of the desktop appliance 502. Operating system 508 then applies the intercepted modification to the property of desktop appliance 502.

In one embodiment, the user interaction component 506 is adapted for storing an identification of the intercepted modification in operating system 508. In another embodiment, remote desktop 510 stores the identification of the intercepted modification. Moreover remote desktop 510 may also apply the modification request to a property of desktop 510.

In yet another embodiment, system 500 may include a second desktop appliance for a request for establishment of a session to the remote desktop 510. In this embodiment, the second desktop appliance will terminate access to the previous resource 512.

Thus, the present disclosure allows a user to configure a desktop appliance 502 without any understanding of the local configuration interfaces for that desktop appliance. In addition, it allows automatic optimization of the best combination of local and remote features, to ensure they work in concert, for example ensuring display resolutions are in sync, or the best choice of local/remote drivers is used. Moreover, the present disclosure allows configuration and plug-and-play capabilities of desktop appliance 502 to effectively be upgraded to those of the remote desktop 510.

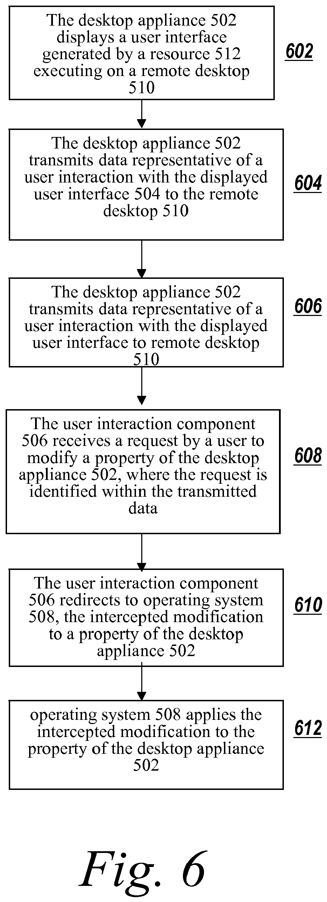

With reference to FIG. 6, in conjunction with FIG. 5, a flow diagram of an exemplary method for controlling configuration data associated with a property of a desktop appliance 502 via a user interface 504 generated by a remote desktop 510 is illustrated. Initially, at step 602, desktop appliance 502 displays a user interface generated by a resource 512 executing on a remote desktop 510. At step 604, the desktop appliance 502 transmits data representative of a user interaction with the displayed user interface 504 to the remote desktop 510. At step 606, the desktop appliance 502 transmits data representative of a user interaction with the displayed user interface to remote desktop 510. At step 608, the user interaction component 506 receives a request by a user to modify a property of the desktop appliance 502, where the request is identified within the transmitted data. At step 610, the user interaction component 506 redirects to operating system 508, the intercepted modification to a property of the desktop appliance 502. Finally, at step 612, operating system 508 applies the intercepted modification to the property of the desktop appliance 502.

In one embodiment, desktop appliance terminates the display of the user interface 504 generated by the resource 512. The desktop appliance 502 then receives from the user a request for establishment of access to the resource 512. Then the user interaction component 506 retrieves, from the remote desktop 510, a stored identification of the modification to the property of the desktop appliance 502. Finally, the user interaction component 506 applies the identified modification to the property of the desktop appliance 502.

In another embodiment, the desktop appliance 502 terminates access to the resource 512. A second desktop appliance then receives from the user a request for establishment of a session to the remote desktop 510. The user interaction component 506 then determines, from the remote machine 510, whether to apply a stored identification of the modification to the property of the desktop appliance 502. Finally, the user interaction component 506 applies a second identified modification to the property of the desktop appliance.

In yet another embodiment, an agent executing on the remote desktop 510 receives, from the user interaction component 506, operating system information associated with a property of the desktop appliance 502. The agent then intercepts a request by the resource 512 executing on the remote desktop 510 for operating system information associated with a property of the remote desktop 510. Finally, the agent provides to the resource 512 the received operating system information, in response to the intercepted request. The agent may also intercept the request by the user to modify the property of the desktop appliance 502 by means of the user interface 504. Alternatively, the agent may intercept the request by the user to modify the property of a keyboard connected to desktop appliance 502 by means of the user interface 504. In addition, the agent may intercept the request by the user to modify the property of a screensaver display by the desktop appliance by means of the user interface 504. In addition, the agent may intercept the request by the user to modify the property of an output device connected to the desktop appliance 502 by means of the user interface 504. Finally, agent may intercept the request by the user to modify the property of a display device connected to the desktop appliance 502 by means of the user interface 504.

The systems and methods described hereinabove may be provided as one or more computer-readable programs embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, LISP, PERL, C, C++, C#, PROLOG, or any byte code language such as JAVA. The software programs may be stored on or in one or more articles of manufacture as object code.

It should be understood that the systems described herein may provide multiple ones of any or each of the components and these components may be provided on either a standalone machine or, in some embodiments, on multiple machines in a distributed system. In addition, the system and methods described above may be provided as one or more computer readable programs embodied on or in one or more articles of manufacture.

Having described certain embodiments of methods and systems for providing a modifiable machine base disk with a personalized desktop environment in a combined computing environment, it will now become apparent to one of skill in the art that other embodiments incorporating the concepts of the disclosure may be used.

## Claims

1. A method for controlling configuration data associated with a property of a desktop appliance (502) via a user interface (504) generated by a remote machine (510), the method comprising:
displaying (602), by a desktop appliance (502), a user interface (504) generated by a resource executing on a remote machine (510);
transmitting(604), by the desktop appliance (502), to the remote machine (510), data representative of a user interaction with the displayed user interface (504);
**characterised in that** the user interaction including a request to modify a property of the desktop appliance via the user interface generated by the resource executing on the remote machine; and
the method further comprises the steps of:
intercepting (608), by a user interaction component (506) executing on the desktop appliance (502), the request to modify the property of the desktop appliance (502), the request identified within the data transmitted to the remote machine;
redirecting(610), by the user interaction component (506), to an operating system (508) executing on the desktop appliance (502), the intercepted modification to the property of the desktop appliance; and
applying (612), by the operating system (508), the intercepted modification to the property of the desktop appliance and
applying, by the remote machine (510), the intercepted modification to a property of the remote machine (510).

2. The method of Claim 1 further comprising storing, by the user interaction component (506), or the remote machine (510), an identification of the intercepted modification.

3. The method of Claim 1 further comprising:
terminating, by the desktop appliance (502), the display of the user interface (504) generated by the resource;
receiving, by the desktop appliance (502), from the user, a request for establishment of access to the resource executing on the remote machine (510);
retrieving, by the user interaction component (506), from the remote machine (510), a stored identification of the modification to the property of the desktop appliance; and
applying, by the user interaction component (506), the identified modification to the property of the desktop appliance.

4. The method of Claim 1 further comprising:
terminating, by the desktop appliance (502), access to the resource; receiving, by a second desktop appliance (502), from the user, a request for establishment of a session to the remote machine (510);
determining, by the user interaction component (506), from the remote machine (510), whether to apply a stored identification of the modification to the property of the desktop appliance; and
applying, by the user interaction component (506), a second identified modification to the property of the desktop appliance.

5. The method of Claim 1 further comprising:
receiving, by an agent executing on the remote machine (510), from the user interaction component (506), operating system information associated with a property of the desktop appliance (502);
intercepting, by the agent, a request by a resource executing on the remote machine (510) for operating system information associated with a property of the remote machine (510); and
providing, by the agent, to the resource, the received operating system information, responsive to the intercepted request.

6. The method of Claim 1 further comprising intercepting, by an agent executing on the remote machine (510), the request by the user to modify the property of the desktop appliance (502) or a keyboard connected to the desktop appliance (502) or a screen saver displayed by the desktop appliance (502) or an output device connected to the desktop appliance (502) or a display device connected to the desktop appliance (502) via the user interface (504).

7. The method of Claim 1, further comprising terminating access to the resource.

8. The method of Claim 7, further comprising:
receiving, by a second desktop appliance, a request from the user for establishment of a session to the remote machine (510;
determining to apply a stored identification of the modification to the property of the desktop appliance; and
applying a second identified modification to the property of the second desktop appliance.

9. The method of Claim 8, wherein user interaction component (506) applies the second identified modification to the property of the second desktop appliance.

10. A system for synchronizing configuration data associated with a display of a desktop appliance (502) using preferences stored on a remote machine (510) comprising:
a desktop appliance (502) configured to display (602) a user interface (504) generated by a resource executing on a remote machine (510), and configured to transmit (604), to the remote machine (510), data representative of a user interaction with the displayed user interface (504);
**characterised in that** the user interaction includes a request to modify a property of the desktop appliance via the user interface generated by the resource executing on the remote machine; and the system further comprises
a user interaction component (506) executing on the desktop appliance (502), configured to transmit (608) the request to modify the property of the desktop appliance (502) via the user interface (504), the request identified within the data transmitted to the remote machine and configured to redirect (610), to an operating system (508) executing on the desktop appliance (502), the intercepted modification to the property of the desktop appliance;
the operating system (508) executing on the desktop appliance (502) and configured to apply (612) the intercepted modification to the property of the desktop appliance and
the remote machine (510) configured to apply the intercepted modification to a property of the remote machine (510).

11. The system of Claim 10, wherein the user interaction component (506) is adapted for storing an identification of the intercepted modification.

12. The system of Claim 10, wherein the remote machine (510) stores an identification of the intercepted modification.

13. The system of Claim 10, further comprising a second desktop appliance (502) for receiving a request for establishment of a session to the remote machine (510), wherein the desktop appliance (502) terminates access to the previous resource.

## Patentansprüche

1. Verfahren zum Steuern von Konfigurationsdaten, die mit einer Eigenschaft eines Desktopgerätes (502) assoziiert sind, mittels einer Benutzeroberfläche (504), die durch eine Remote-Maschine (510) erzeugt wird, wobei das Verfahren Folgendes umfasst:
Anzeigen (602) einer Benutzeroberfläche (504), die durch eine Ressource erzeugt wird, die auf einer Remote-Maschine (510) abläuft, durch das Desktopgerät (502);
Übertragen (604) von Daten, die repräsentativ für eine Benutzerinteraktion mit der angezeigten Benutzeroberfläche (504) sind, durch das Desktopgerät (502) an die Remote-Maschine (510);
**dadurch gekennzeichnet, dass** die Benutzerinteraktion eine Anforderung zum Modifizieren einer Eigenschaft des Desktopgerätes mittels der Benutzeroberfläche, die durch die Ressource erzeugt wird, die auf der Remote-Maschine abläuft, beinhaltet; und
wobei das Verfahren ferner die folgenden Schritte umfasst:
Abfangen (608) der Anforderung zum Modifizieren der Eigenschaft des Desktopgerätes (502) durch eine Benutzerinteraktionskomponente (506), die auf dem Desktopgerät (502) abläuft, wobei die Anforderung innerhalb der Daten identifiziert wird, die an die Remote-Maschine übertragen werden;
Umleiten (610) der abgefangenen Modifikation an der Eigenschaft des Desktopgerätes durch die Benutzerinteraktionskomponente (506) zu einem Betriebssystem (508), das auf dem Desktopgerät (502) abläuft; und
Anwenden (612) der abgefangenen Modifikation an der Eigenschaft des Desktopgerätes durch das Betriebssystem (508) und
Anwenden der abgefangenen Modifikation an einer Eigenschaft der Remote-Maschine (510) durch die Remote-Maschine (510).

2. Verfahren nach Anspruch 1, das ferner Speichern einer Identifikation der abgefangenen Modifikation durch die Benutzerinteraktionskomponente (506) oder die Remote-Maschine (510) umfasst.

3. Verfahren nach Anspruch 1, das ferner Folgendes umfasst:
Beenden der Anzeige der Benutzeroberfläche (504), die durch die Ressource erzeugt wird, durch das Desktopgerät (502);
Empfangen einer Anforderung zum Einrichten eines Zugangs zu der Ressource, die auf der Remote-Maschine (510) abläuft, von dem Benutzer durch das Desktopgerät (502);
Abrufen einer gespeicherten Identifikation der Modifikation an der Eigenschaft des Desktopgerätes von der Remote-Maschine (510) durch die Benutzerinteraktionskomponente (506); und
Anwenden der identifizierten Modifikation an der Eigenschaft des Desktopgerätes durch die Benutzerinteraktionskomponente (506).

4. Verfahren nach Anspruch 1, das ferner Folgendes umfasst:
Beenden eines Zugangs zu der Ressource durch das Desktopgerät (502); Empfangen einer Anforderung zum Einrichten einer Sitzung mit der Remote-Maschine (510) von dem Benutzer durch ein zweites Desktopgerät (502);
Bestimmen durch die Benutzerinteraktionskomponente (506) von der Remote-Maschine (510), ob eine gespeicherte Identifikation der Modifikation an der Eigenschaft des Desktopgerätes angewandt wird; und
Anwenden einer zweiten identifizierten Modifikation an der Eigenschaft des Desktopgerätes durch die Benutzerinteraktionskomponente (506).

5. Verfahren nach Anspruch 1, das ferner Folgendes umfasst:
Empfangen von Betriebssysteminformationen, die mit einer Eigenschaft des Desktopgerätes (502) assoziiert sind, durch einen Agenten, der auf der Remote-Maschine (510) abläuft, von der Benutzerinteraktionskomponente (506);
Abfangen einer Anforderung durch eine Ressource, die auf der Remote-Maschine (510) abläuft, für Betriebssysteminformationen, die mit einer Eigenschaft der Remote-Maschine (510) assoziiert sind, durch den Agenten; und
Liefern der empfangenen Betriebssysteminformationen als Reaktion auf die abgefangene Anforderung durch den Agenten an die Ressource.

6. Verfahren nach Anspruch 1, das ferner Abfangen der Anforderung durch den Benutzer zum Modifizieren der Eigenschaft des Desktopgerätes (502) oder einer Tastatur, die mit dem Desktopgerät (502) verbunden ist, oder eines Bildschirmschoners, der durch das Desktopgerät (502) angezeigt wird, oder einer Ausgabevorrichtung, die mit dem Desktopgerät (502) verbunden ist, oder einer Anzeigevorrichtung, die mit dem Desktopgerät (502) verbunden ist, durch einen Agenten, der auf der Remote-Maschine (510) ausgeführt wird, mittels der Benutzeroberfläche (504) umfasst.

7. Verfahren nach Anspruch 1, das ferner Beenden eines Zugangs zu der Ressource umfasst.

8. Verfahren nach Anspruch 7, das ferner Folgendes umfasst:
Empfangen einer Anforderung von dem Benutzer zum Einrichten einer Sitzung mit der Remote-Maschine (510) durch ein zweites Desktopgerät;
Bestimmen, eine gespeicherte Identifikation der Modifikation an der Eigenschaft des Desktopgerätes anzuwenden; und
Anwenden einer zweiten identifizierten Modifikation an der Eigenschaft des zweiten Desktopgerätes.

9. Verfahren nach Anspruch 8, wobei eine Benutzerinteraktionskomponente (506) die zweite identifizierte Modifikation an der Eigenschaft des zweiten Desktopgerätes anwendet.

10. System zum Synchronisieren von Konfigurationsdaten, die mit einer Anzeige eines Desktopgerätes (502) assoziiert sind, unter Verwendung von Voreinstellungen, die auf einer Remote-Maschine (510) gespeichert sind, das Folgendes umfasst:
ein Desktopgerät (502), das zum Anzeigen (602) einer Benutzeroberfläche (504), die durch eine Ressource erzeugt wird, die auf einer Remote-Maschine (510) abläuft, konfiguriert ist und zum Übertragen (604) von Daten, die repräsentativ für eine Benutzerinteraktion mit der angezeigten Benutzeroberfläche (504) sind, an die Remote-Maschine (510) konfiguriert ist;
**dadurch gekennzeichnet, dass** die Benutzerinteraktion eine Anforderung zum Modifizieren einer Eigenschaft des Desktopgerätes mittels der Benutzeroberfläche, die durch die Ressource erzeugt wird, die auf der Remote-Maschine abläuft, beinhaltet; und wobei das System ferner Folgendes umfasst:
eine Benutzerinteraktionskomponente (506), die auf dem Desktopgerät (502) abläuft und zum Übertragen (608) der Anforderung zum Modifizieren der Eigenschaft des Desktopgerätes (502) mittels der Benutzeroberfläche (504) konfiguriert ist, wobei die Anforderung innerhalb der Daten identifiziert wird, die an die Remote-Maschine übertragen werden, und zum Umleiten (610) der abgefangenen Modifikation an der Eigenschaft des Desktopgerätes zu einem Betriebssystem (508), das auf dem Desktopgerät (502) abläuft, konfiguriert ist;
wobei das Betriebssystem (508) auf dem Desktopgerät (502) abläuft und zum Anwenden (612) der abgefangenen Modifikation an der Eigenschaft des Desktopgerätes konfiguriert ist und
wobei die Remote-Maschine (510) zum Anwenden der abgefangenen Modifikation an einer Eigenschaft der Remote-Maschine (510) konfiguriert ist.

11. System nach Anspruch 10, wobei die Benutzerinteraktionskomponente (506) zum Speichern einer Identifikation der abgefangenen Modifikation ausgelegt ist.

12. System nach Anspruch 10, wobei die Remote-Maschine (510) eine Identifikation der abgefangenen Modifikation speichert.

13. System nach Anspruch 10, das ferner ein zweites Desktopgerät (502) zum Empfangen einer Anforderung zum Einrichten einer Sitzung mit der Remote-Maschine (510) umfasst, wobei das Desktopgerät (502) einen Zugang zu der vorherigen Ressource beendet.

## Revendications

1. Procédé de commande de données de configuration associées à une propriété d'un appareil de bureau (502) via une interface utilisateur (504) générée par une machine distante (510), le procédé comprenant :
l'affichage (602), par un appareil de bureau (502), d'une interface utilisateur (504) générée par une ressource s'exécutant sur une machine distante (510) ;
la transmission (604), par l'appareil de bureau (502), à la machine distante (510), de données représentatives d'une interaction d'utilisateur avec l'interface utilisateur affichée (504) ;
**caractérisé en ce que** l'interaction d'utilisateur inclut une requête pour modifier une propriété de l'appareil de bureau via l'interface utilisateur générée par la ressource s'exécutant sur la machine distante ; et
le procédé comprend en outre les étapes de :
l'interception (608), par un composant d'interaction d'utilisateur (506) s'exécutant sur l'appareil de bureau (502), de la requête pour modifier la propriété de l'appareil de bureau (502), la requête identifiée dans les données transmises à la machine distante ;
la redirection (610), par le composant d'interaction d'utilisateur (506), vers un système d'exploitation (508) s'exécutant sur l'appareil de bureau (502), de la modification interceptée à la propriété de l'appareil de bureau ; et
l'application (612), par le système d'exploitation (508), de la modification interceptée à la propriété de l'appareil de bureau et
l'application, par la machine distante (510), de la modification interceptée à une propriété de la machine distante (510).

2. Procédé selon la revendication 1, comprenant en outre le stockage, par le composant d'interaction d'utilisateur (506) ou par la machine distante (510), d'une identification de la modification interceptée.

3. Procédé selon la revendication 1, comprenant en outre :
la terminaison, par l'appareil de bureau (502), de l'affichage de l'interface utilisateur (504) générée par la ressource ;
la réception, par l'appareil de bureau (502), depuis l'utilisateur, d'une requête pour établir un accès à la ressource s'exécutant sur la machine distante (510) ;
la récupération, par le composant d'interaction d'utilisateur (506), depuis la machine distante (510), d'une identification stockée de la modification à la propriété de l'appareil de bureau ; et
l'application, par le composant d'interaction d'utilisateur (506), de la modification identifiée à la propriété de l'appareil de bureau.

4. Procédé selon la revendication 1 comprenant en outre :
la terminaison, par l'appareil de bureau (502), de l'accès à la ressource ; la réception, par un second appareil de bureau (502), depuis l'utilisateur, d'une requête pour établir une session avec la machine distante (510) ;
le fait de déterminer, par le composant d'interaction d'utilisateur (506), depuis la machine distante (510), s'il faut appliquer une identification stockée de la modification à la propriété de l'appareil de bureau ; et
l'application, par le composant d'interaction d'utilisateur (506), d'une seconde modification identifiée à la propriété de l'appareil de bureau.

5. Procédé selon la revendication 1 comprenant en outre :
la réception, par un agent s'exécutant sur la machine distante (510), depuis le composant d'interaction d'utilisateur (506), d'informations de système d'exploitation associées à une propriété de l'appareil de bureau (502) ;
l'interception, par l'agent, d'une requête par une ressource s'exécutant sur la machine distante (510) pour des informations de système d'exploitation associées à une propriété de la machine distante (510) ; et
la fourniture, par l'agent, à la ressource, des informations de système d'exploitation reçues, en réponse à la requête interceptée.

6. Procédé selon la revendication 1 comprenant en outre l'interception, par un agent s'exécutant sur la machine distante (510), de la requête par l'utilisateur pour modifier la propriété de l'appareil de bureau (502) ou d'un clavier connecté à l'appareil de bureau (502) ou d'un économiseur d'écran affiché par l'appareil de bureau (502) ou d'un dispositif de sortie connecté à l'appareil de bureau (502) ou d'un dispositif d'affichage connecté à l'appareil de bureau (502) via l'interface utilisateur (504).

7. Procédé selon la revendication 1, comprenant en outre la terminaison de l'accès à la ressource.

8. Procédé selon la revendication 7, comprenant en outre :
la réception, par un second appareil de bureau, d'une requête depuis l'utilisateur pour établir une session avec la machine distante (510) ;
le fait de déterminer d'appliquer une identification stockée de la modification à la propriété de l'appareil de bureau ; et
l'application d'une seconde modification identifiée à la propriété du second appareil de bureau.

9. Procédé selon la revendication 8, dans lequel le composant d'interaction d'utilisateur (506) applique la seconde modification identifiée à la propriété du second appareil de bureau.

10. Système pour synchroniser des données de configuration associées à un affichage d'un appareil de bureau (502) en utilisant des préférences stockées sur une machine distante (510) comprenant :
un appareil de bureau (502) configuré pour afficher (602) une interface utilisateur (504) générée par une ressource s'exécutant sur une machine distante (510), et configuré pour transmettre (604), à la machine distante (510), des données représentatives d'une interaction d'utilisateur avec l'interface utilisateur affichée (504) ;
**caractérisé en ce que** l'interaction d'utilisateur inclut une requête pour modifier une propriété de l'appareil de bureau via l'interface utilisateur générée par la ressource s'exécutant sur la machine distante ; et le système comprend en outre
un composant d'interaction d'utilisateur (506) s'exécutant sur l'appareil de bureau (502), configuré pour transmettre (608) la requête pour modifier la propriété de l'appareil de bureau (502) via l'interface utilisateur (504), la requête identifiée dans les données transmises à la machine distante et configuré pour rediriger (610), vers un système d'exploitation (508) s'exécutant sur l'appareil de bureau (502), la modification interceptée à la propriété de l'appareil de bureau ;
le système d'exploitation (508) s'exécutant sur l'appareil de bureau (502) et configuré pour appliquer (612) la modification interceptée à la propriété de l'appareil de bureau et
la machine distante (510) configurée pour appliquer la modification interceptée à une propriété de la machine distante (510).

11. Système selon la revendication 10,
dans lequel le composant d'interaction d'utilisateur (506) est adapté pour stocker une identification de la modification interceptée.

12. Système selon la revendication 10, dans lequel la machine distante (510) stocke une identification de la modification interceptée.

13. Système selon la revendication 10, comprenant en outre un second appareil de bureau (502) pour recevoir une requête pour établir une session avec la machine distante (510), dans lequel l'appareil de bureau (502) termine l'accès à la ressource précédente.
